# FASCICULE DE BREVET EUROPEEN

(11) **EP 2 817 688 B1**
(45) Date de publication et mention de la délivrance du brevet: **13.11.2024**
(21) Numéro de dépôt: 13710503.7
(22) Date de dépôt: 22.02.2013
(51) Int. Cl.: G01M 7/00, G01H 1/00, G01M 15/14, G05B 23/02

(54) **DISPOSITIF DE DETECTION D'ANOMALIES PAR ANALYSE ACOUSTIQUE D'UNE TURBOMACHINE D'AERONEF**
VORRICHTUNG ZUR ERKENNUNG VON ANOMALIEN IN EINEM FLUGZEUGTURBINENMOTOR DURCH AKUSTISCHE ANALYSE
DEVICE FOR DETECTING ANOMALIES IN AN AIRCRAFT TURBINE ENGINE BY ACOUSTIC ANALYSIS

(30) Priorité: 24.02.2012 FR 1251713
(43) Date de publication de la demande: 31.12.2014
(73) Titulaire: Safran Aircraft Engines, 75015 Paris (FR)
(72) Inventeur: LACAILLE, Jérôme, Henri, Noël, F-77550 Moissy-Cramayel Cedex (FR)
(74) Mandataire: Cabinet Camus Lebkiri
(86) Numéro de dépôt international: PCT/FR2013/050362
(87) Numéro de publication internationale: WO 2013/124591

(56) Documents cités:
- JP-A- S58 167 923
- US-A1- 2002 033 946
- US-A1- 2010 161 255
- US-A1- 2011 150 626
- US-B1- 6 360 607
- US-B2- 7 363 111

## Description

### DOMAINE TECHNIQUE DE L'INVENTION

Le domaine technique de l'invention est celui des diagnostics de défaillances d'une turbomachine d'aéronef, et plus particulièrement celui des diagnostics de défaillance par analyse acoustique, ou analyse vibratoire. La présente invention concerne un dispositif de détection d'anomalies par analyse acoustique d'une turbomachine d'aéronef.

### ARRIERE PLAN TECHNOLOGIQUE DE L'INVENTION

Les défaillances qui apparaissent dans des machines tournantes, telles une turbomachine d'aéronef, sont rarement décelables visuellement, ou alors il est déjà trop tard pour agir. De ce fait, des méthodes de diagnostic sont nécessaires pour prévoir des pannes et en minimiser les conséquences. On essaie ainsi d'anticiper les ruptures de pièces qui peuvent endommager la machine ou laisser une partie de pièce cassée dans la machine.

Parmi les différents phénomènes physiques utilisés pour mettre en évidence des défauts de fonctionnement ou de dégradation d'une machine tournante, l'analyse acoustique est la plus usitée. Les vibrations sont caractéristiques de l'état de l'équipement, on parle de signature vibratoire, ou signature acoustique. Le prélèvement et le traitement de la signature vibratoire permet de connaître rapidement l'état de l'équipement et de suivre son évolution dans le temps sans effectuer de démontage de la machine.

Pour une turbomachine, les problèmes moteurs identifiables à partir des vibrations sont nombreux : contacts rotor-stator, entrée de corps étrangers, balourd anormal, défaut de roulements (billes ou bagues écaillés), défauts d'engrenage (dents usées ou abîmées), système auxiliaire défaillant (pompe)...

Le document US 2011 150 626 décrit un dispositif non embarqué de détection d'anomalie par analyse acoustique mais pour effectuer une analyse acoustique d'une turbomachine d'aéronef, il est nécessaire d'effectuer une acquisition de données sur un temps relativement long, ce qui rend difficile un transfert des données de l'aéronef vers le sol. Par ailleurs, un traitement de ces données directement à bord de l'aéronef est difficilement envisageable car il nécessite une puissance de calcul importante. Ceci ne permet de faire que des mesures simplificatrices permettant de détecter des phénomènes anormaux grossiers comme du balourd ou de fortes ingestions.

Les données sont donc classiquement récupérées et analysées au sol sur banc d'essai, ledit banc d'essai disposant de systèmes d'acquisition haute fréquence et de calculateurs puissants. Les phénomènes mécaniques sont en effet plus faciles à détecter lors des phases transitoires. Or ceci a pour inconvénient de nécessiter une dépose de la turbomachine.

### DESCRIPTION GENERALE DE L'INVENTION

L'objet de l'invention propose un dispositif et un procédé de détection d'anomalies par analyse acoustique d'une turbomachine d'aéronef ne nécessitant ni de dépose du moteur, ni de traitement de données à bord de l'avion, ni de transmission de données depuis l'aéronef vers le sol.

Selon un premier aspect, l'invention concerne essentiellement un dispositif de détection d'anomalies par analyse acoustique d'une turbomachine d'aéronef, non embarqué et comportant :
- au moins un module mobile comportant :
   ∘ des moyens d'acquisition directionnels de signaux acoustiques de la turbomachine ;
   ∘ des moyens de traitement desdits signaux, adaptés pour générer un rapport d'endommagement ;
   ∘ des moyens de transmission dudit rapport d'endommagement ;
- un serveur apte à échanger des données avec le au moins un module, ledit serveur comportant :
   ∘ des moyens de réception du rapport d'endommagement ;
   ∘ des moyens de stockage adaptés pour stocker ledit rapport d'endommagement,
   ∘ ledit dispositif est caractérisé en ce que lorsque l'aéronef est mobile, les moyens d'asservissement orientent l'orientation d'un capteur selon la position et la trajectoire de l'aéronef.

Grâce au dispositif selon l'invention, les signaux acoustiques sont récupérés par le module mobile non-embarqué directement depuis sol, lorsque l'aéronef est au parking (pour des tests de démarrage et d'arrêt de la turbomachine) ou lorsque l'aéronef décolle ou atterrit, via les moyens d'acquisition directionnels permettant de s'adapter à une mobilité de l'aéronef. Les signaux sont ensuite traités par les moyens de traitement, avantageusement des calculateurs disposant d'une puissance de calcul importante, puissance indisponible à bord de l'aéronef. Un rapport d'endommagement est enfin transmis au serveur qui le stocke, ledit serveur pouvant avantageusement recevoir des rapports de recherche de plusieurs modules.

Outre les caractéristiques principales qui viennent d'être mentionnées dans le paragraphe précédent, le dispositif selon l'invention peut présenter une ou plusieurs caractéristiques complémentaires parmi les suivantes, considérées individuellement ou selon les combinaisons techniquement possibles :
- les moyens d'acquisition comportent un capteur directionnel tel qu'un microphone, et un amplificateur parabolique.
- les moyens d'acquisition comportent des moyens d'asservissement adaptés pour contrôler l'orientation du capteur directionnel.
- les moyens d'acquisition comportent des moyens d'identification de l'aéronef.
- chaque module comporte des moyens d'enregistrement des signaux acoustiques acquis par les moyens d'acquisition.
- le serveur comporte une interface utilisateur adaptée pour permettre à un utilisateur de visualiser un rapport d'endommagement.
- les moyens de réception du serveur sont adaptés pour recevoir des données en provenance de l'aéronef.
- le serveur comporte des moyens d'analyse aptes à exploiter les données en provenance de l'aéronef.

Selon un deuxième aspect, l'invention concerne un procédé de détection d'anomalies par analyse acoustique d'une turbomachine d'aéronef, ledit procédé étant mis en oeuvre par un dispositif avec l'une quelconque des caractéristiques précédentes, ledit procédé comportant des étapes successives de :
- acquisition de signaux acoustiques provenant de la turbomachine ;
- traitement desdits signaux de sorte à générer un rapport d'endommagement ;
- transmission dudit rapport d'endommagement au serveur ;
- stockage dudit rapport d'endommagement.

L'invention et ses différentes applications seront mieux comprises à la lecture de la description qui suit et à l'examen des figures qui l'accompagnent.

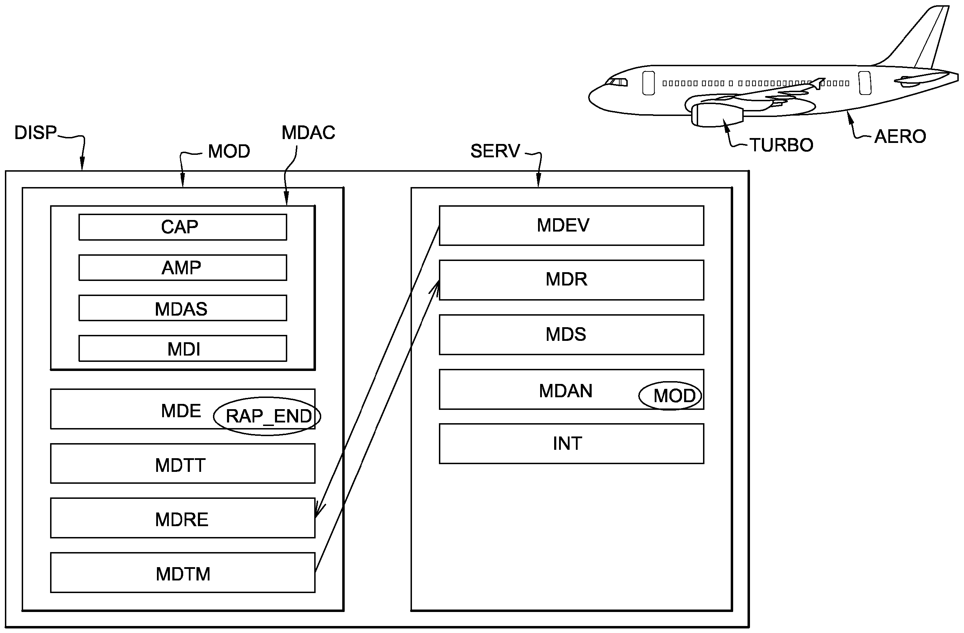

### BREVE DESCRIPTION DE LA FIGURE

La figure n'est présentée qu'à titre indicatif et nullement limitatif de l'invention.
La figure montre un diagramme en bloc représentant les modules constitutifs d'un dispositif selon un mode de réalisation de l'invention.

### DESCRIPTION DETAILLEE D'AU MOINS UN MODE DE REALISATION DE L'INVENTION

La figure représente schématiquement un dispositif DISP de détection d'anomalies par analyse acoustique d'une turbomachine TURBO d'aéronef AERO, selon un mode de réalisation de l'invention. Ledit dispositif DISP est non-embarqué dans l'aéronef AERO, et permet des analyses acoustiques lorsque l'aéronef AERO est en phase de décollage ou d'atterrissage, ou au parking.

Le dispositif DISP comporte :
- un module MOD mobile comportant :
   ∘ des moyens d'acquisition MDAC de signaux acoustiques SIG, lesdits moyens d'acquisition MDAC comportant :
      ▪ un microphone directionnel CAP ;
      ▪ un amplificateur parabolique AMP ;
      ▪ des moyens d'asservissement MDAS ;
      ▪ des moyens d'identification MDI de l'aéronef AERO ;
   ∘ des moyens d'enregistrement MDE des signaux acoustiques SIG ;
   ∘ des moyens de traitement MDTT des signaux acoustiques SIG ;
   ∘ des moyens de transmission MDTM,
   ∘ des moyens de récupération MDRE, et
- un serveur SERV distant comportant :
   ∘ des moyens de réception MDR ;
   ∘ des moyens de stockage MDS ;
   ∘ des moyens d'analyse MDAN ;
   ∘ des moyens d'envoi MDEV ;
   ∘ une interface utilisateur INT.

Le module MOD a pour fonctions principales l'acquisition, via les moyens d'acquisition MDAC, et le traitement, via les moyens d'enregistrement MDE et les moyens de traitement MDTT, de signaux acoustiques SIG provenant de la turbomachine TURBO. Les moyens de transmission MDTM du module MOD et les moyens de réception MDR du serveur SERV sont adaptés pour communiquer l'un avec l'autre. Ainsi, le serveur SERV peut recevoir des données provenant du module MOD. Le serveur SERV a pour fonctions principales le stockage desdites données vis les moyens de stockage MDS et leur consultation via l'interface utilisateur INT. On note que dans un mode de réalisation, l'interface INT est physiquement distincte des autres composants du serveur SERV. Dans un mode de réalisation de l'invention, le dispositif DISP comporte deux modules MOD, le serveur est alors capable de communiquer avec chacun des modules MOD. Deux modules MOD permettent en effet d'analyser simultanément les deux moteurs de l'aéronef AERO.

On peut également envisager que le serveur SERV soit mutualisé pour une pluralité de modules MOD mobiles. Ainsi, le serveur SERV reçoit des données provenant de plusieurs modules MOD analysant des turbomachines TURBO de différents aéronefs AERO, lesdites données étant alors consultables de manière centralisées depuis l'interface utilisateur INT du serveur SERV.

Les moyens d'identification MDI permettent d'identifier l'aéronef AERO dans le cas où le serveur SERV est mutualisé à plusieurs modules MOD. Dans un mode de réalisation, les moyens d'identification MDI sont des moyens de prise de vue. A un seuil de détection déterminé d'énergie sonore, les moyens de prise de vue MDI se déclenchent, prenant une photographie de l'aéronef AERO qui est utilisée pour identifier l'aéronef AERO grâce à des algorithmes de reconnaissance, bien connus de l'homme du métier, permettant de reconnaître le nom de l'avion. Dans un autre mode de réalisation, les moyens d'identification MDI comportent une interface utilisateur installée sur le module MOD, depuis laquelle un utilisateur saisit le nom de l'aéronef AERO dont la turbomachine TURBO est analysée. On note que cette interface peut être également utilisée pour régler l'orientation du microphone CAP, avec éventuellement une visualisation pour l'aide au suivi, ou encore pour contrôler les paramètres de poursuite ou pour régler d'autres paramètres de prétraitements algorithmiques.

Dans un autre mode de réalisation, les moyens d'identification MDI sont des capteurs aptes à capter des émissions radio provenant de l'aéronef AERO ou de l'aéroport, lesdites émissions pouvant contenir des informations sur l'aéronef AERO. Enfin, dans un autre mode de réalisation, les moyens d'identification MDI utilisent des moyens mis à disposition par l'aéroport, tels des planifications de décollage/atterrissage, pour identifier l'aéronef AERO. Les moyens d'identification MDI permettent avantageusement de sauvegarder la date de l'analyse, l'heure, et éventuellement d'autres observations telles le lieu.

Grâce à la capacité de mobilité du module MOD, on peut l'amener près d'une turbomachine TURBO de l'aéronef AERO à analyser, sans devoir déposer la turbomachine TURBO sur un banc d'essai. Si l'aéronef AERO est immobile, un opérateur oriente manuellement le microphone CAP dans la direction de la turbomachine TURBO, ou alors le microphone CAP s'oriente automatiquement dans une direction selon laquelle il capte un maximum d'émissions sonores.

Lorsque l'aéronef AERO est mobile, c'est-à-dire en phase de décollage ou d'atterrissage, les moyens d'asservissement MDAS adaptent l'orientation du microphone directionnel CAP de sorte qu'il suive la trajectoire de l'aéronef AERO, pour capter de façon optimale les signaux acoustiques SIG. Dans un mode de réalisation, le microphone CAP est solidaire d'un axe mobile asservi par les moyens d'asservissement MDAS opérant au moyen d'algorithmes de balayage et de poursuite connus de l'homme du métier. Quelques exemples de publication traitant d'algorithmes de balayage et de poursuite sont donnés ci-dessous :
- J. Lacaille, "Industrialisation d'algorithmes mathématiques," Paris 1, 2004.
- J.-françois Boulanger, F. Galland, P. Réfrégier, and P. Martin, "Détection et poursuite de cibles par minimisation de la complexité stochastique," in MajecSTIC, 2009, pp. 1-4.
- S. Kumar, "Détection and Tracking Algorithms for IRST," Bombay, 2004.
- W. Hao, C. Sankaranarayanan, Aswin, and R. Chellappa, "Online Empirical Evaluation of Tracking Algorithms," Applied Physics, pp. 1-37, 2009.
- M. Lashley, "Kalman Filter Based Tracking Algorithms For Software GPS Receivers," Auburn University, 2006.

Les moyens d'asservissement MDAS opèrent en deux étapes :
- Selon une première étape, dite étape de balayage, l'orientation de l'axe balaye rapidement un secteur de l'espace, par rotation de l'axe, afin que le microphone CAP détecte une zone de laquelle provient une forte émission sonore. On appelle cette zone : le point chaud.
- Selon une deuxième étape, dite étape de poursuite, le point chaud (mobile) est à nouveau détecté, et cela plusieurs fois, les moyens d'asservissement MDAS réalisant l'ajustement rapide de l'orientation du microphone CAP autour des premières détections. Les coordonnées successives du point chaud sont sauvegardées via les coordonnées cylindriques de l'axe. Cette succession de positions permet d'estimer une trajectoire locale à l'ordre 3 (position, vitesse, accélération) de l'aéronef AERO. Les moyens d'asservissement MDAS orientent ainsi progressivement le microphone CAP en appliquant une direction estimée par anticipation, tout en continuant des petits ajustements locaux aléatoires servant à affiner la position du point chaud au cours du temps. La trajectoire estimée est ainsi de plus en plus précise.

Le microphone CAP est associé à l'amplificateur parabolique AMP, qui amplifie les émissions sonores captées par le microphone CAP. Lorsque le signal acoustique SIG détecté est de qualité suffisante, un enregistrement de quelques secondes est effectué, via les moyens d'enregistrement MDE. Cet enregistrement est alors traité par les moyens de traitement MDTT. Les moyens de traitement MDTT sont utilisés pour générer des rapports appelés « rapports d'endommagement » RAP_END, listant les défaillances détectées de la turbomachine TURBO analysée. Les moyens de traitement MDTT intègrent des algorithmes de traitement, dont deux exemples sont donnés ci-dessous.

Le premier algorithme est détaillé dans les documents :
- « Environment for processing of wideband signal », E.Rudyk, R. Klein, RDK, PHM 2009 ;
- « Environment for vibration based diagnostics », R. Klein, RDK, PHM 2010.

Cet algorithme nécessite une identification du type de turbomachineTURBO à partir de l'identification de l'aéronef AERO par les moyens d'identification MDI. L'algorithme permet de repérer des anomalies très spécifiques sur des roulements ou des engrenages pourvu que les caractéristiques de la turbomachine TURBO analysée soient connues.

Le deuxième algorithme est détaillé dans le document « Identification de sources vibratoires indépendantes », A.Hazan, SAMM, Université Paris 1 Panthéon Sorbonne. Cet algorithme est plus général que le précédent, mais nécessite cependant la constitution d'un modèle MODEL appris par l'algorithme, déterminé en fonction de spectres sonores successifs de la turbomachine TURBO analysée. L'algorithme n'est donc pas capable de détecter une anomalie lors des premiers enregistrements, mais seulement au fur et à mesure de la constitution d'une base de données de spectres associés à la turbomachine TURBO, et de la création d'un modèle MODEL de plus en plus élaboré.

Les modèles MODEL utilisés par le deuxième algorithme sont reçus par le module MOD via les moyens de récupération MDRE, et proviennent du serveur SERV qui les a envoyés via les moyens d'envoi MDEV. Le serveur SERV conçoit en effet lesdits modèles MODEL à partir des vitesses de rotation des arbres moteurs de la turbomachine TURBO analysée. Lesdites vitesses sont facilement identifiables par un algorithme de poursuite d'ordre, dont un exemple est donné dans le document « Trajectory clustering for vibration détection in aircraft engines », A. Hazan, ICDM 2010. Un tel algorithme détecte des anomalies ou des tendances anormales qui sont immédiatement transférées au serveur SERV sous la forme d'un rapport de détection par un système de communication tel le Wifi ou le 3G.

A partir des rapports de détection, les moyens d'analyse MDAN du serveur SERV conçoivent les modèles MODEL et le serveur SERV les envoie au module MOD. On note que dans un mode de réalisation privilégié, les modèles MODEL sont consultables par des utilisateurs depuis une interface Web à laquelle les utilisateurs peuvent s'abonner. Chaque utilisateur ne peut visualiser que les données relatives aux aéronefs AERO sur lesquels il a des droits, mais le serveur SERV peut utiliser des rapports de détection relatifs à plusieurs aéronefs AERO pour concevoir des modèles MODEL élaborés spécifiques à un type d'aéronef AERO en particulier ou à un type de turbomachine TURBO. Ainsi, si un modèle MODEL spécifique à une turbomachine TURBO n'est pas disponible, il est néanmoins possible d'utiliser des modèles MODEL basés sur un type de turbomachine TURBO similaire. Les clients peuvent aussi s'abonner à un service supplémentaire les informant de la création de nouveaux modèles MODEL les concernant.

A partir des modèles MODEL, le deuxième algorithme calcule une décomposition en ondelettes du logarithme d'un spectre moyen. Les coefficients de cette décomposition servent d'indicateurs pour la détection d'anomalies et la création d'un rapport d'endommagement RAP_END.

Que ce soit au moyen du premier algorithme, du deuxième algorithme, ou d'autres algorithmes non décrits, les moyens de traitement MDTT créent finalement un rapport d'endommagement RAP_END. Lesdits rapports d'endommagement RAP_END sont alors transmis du module MOD vers le serveur SERV qui les stocke via les moyens de stockage MDS. Les rapports d'endommagement RAP_END sont consultables depuis l'interface utilisateur INT du serveur SERV, ou par connexion distante des utilisateurs depuis une autre interface via un protocole Internet. Les utilisateurs abonnés au service reçoivent les rapports d'endommagement RAP_END automatiquement ou à la demande.

## Revendications

1. Dispositif (DISP) de détection d'anomalies par analyse acoustique d'une turbomachine (TURBO) d'aéronef (AERO), le dispositif (DISP) étant non embarqué et le dispositif (DISP) comportant :
- au moins un module (MOD) mobile comportant :
∘ des moyens d'acquisition (MDAC) directionnels de signaux acoustiques de la turbomachine (TURBO) ;
∘ des moyens de traitement (MDTT) desdits signaux, adaptés pour générer un rapport d'endommagement (RAP_END) ;
∘ des moyens de transmission (MDTM) dudit rapport d'endommagement (RAP_END) ;
- un serveur (SERV) apte à échanger des données avec le au moins un module (MOD), ledit serveur (SERV) comportant :
∘ des moyens de réception (MDR) du rapport d'endommagement (RAP_END) ;
∘ des moyens de stockage (MDS) adaptés pour stocker ledit rapport d'endommagement (RAP_END),
**caractérisée en ce que** lorsque l'aéronef (AERO) est mobile, des moyens d'asservissement (MDAS) orientent l'orientation d'un capteur (CAP) selon la position et la trajectoire de l'aéronef (AERO).

2. Dispositif (DISP) selon l'une quelconque des revendications précédentes, **caractérisé en ce que** les moyens d'acquisition (MDAC) comportent un capteur (CAP) directionnel tel qu'un microphone, et un amplificateur (AMP) parabolique.

3. Dispositif (DISP) selon la revendication précédente, **caractérisé en ce que** les moyens d'acquisition (MDAC) comportent des moyens d'asservissement (MDAS) adaptés pour contrôler l'orientation du capteur (CAP) directionnel.

4. Dispositif (DISP) selon l'une quelconque des revendications précédentes, **caractérisé en ce que** les moyens d'acquisition (MDAC) comportent des moyens d'identification (MDI) de l'aéronef (AERO).

5. Dispositif (DISP) selon l'une quelconque des revendications précédentes, **caractérisé en ce que** le au moins un module (MOD) comporte des moyens d'enregistrement (MDE) des signaux acoustiques acquis par les moyens d'acquisition (MDAC).

6. Dispositif (DISP) selon l'une quelconque des revendications précédentes, **caractérisé en ce que** le serveur (SERV) comporte une interface utilisateur (INT) adaptée pour permettre à un utilisateur de visualiser un rapport d'endommagement (RAP_END).

7. Dispositif (DISP) selon l'une quelconque des revendications précédentes, **caractérisé en ce que** les moyens de réception (MDR) du serveur (SERV) sont adaptés pour recevoir des données en provenance de l'aéronef (AERO).

8. Dispositif (DISP) selon la revendication précédente, **caractérisé en ce que** le serveur (SERV) comporte des moyens d'analyse (MDAN) aptes à exploiter les données en provenance de l'aéronef (AERO).

9. Procédé (PROC) de détection d'anomalies par analyse acoustique d'une turbomachine (TURBO) d'aéronef (AERO), ledit procédé étant mis en oeuvre par un dispositif (DISP) selon l'une quelconque des revendications précédentes, ledit procédé (PROC) comportant des étapes successives de :
- acquisition de signaux acoustiques provenant de la turbomachine (TURBO) ;
- traitement desdits signaux de sorte à générer un rapport d'endommagement (RAP_END) ;
- transmission dudit rapport d'endommagement (RAP_END) au serveur (SERV) ;
- stockage dudit rapport d'endommagement (RAP_END).

## Patentansprüche

1. Vorrichtung (DISP) zur Erkennung von Anomalien durch akustische Analyse einer Turbomaschine (TURBO) eines Luftfahrzeugs (AERO), bestehend aus:
- mindestens einem bewegliches Modul (MOD), bestehend aus:
∘ Mitteln zur direktionalen Erfassung (MDAC) akustischer Signale der Turbomaschine (TURBO);
∘ Mitteln zur Verarbeitung (MDTT) dieser Signale, um daraus einen Schadensbericht (RAP_END) zu erstellen;
∘ Mitteln zur Übertragung (MDTM) dieses Schadensberichts (RAP_END);
- einem Server (SERV), der Daten mit dem mindestens einem Modul (MOD) austauschen kann, wobei der Server (SERV) Folgendes umfasst:
∘ Mittel zum Empfang (MDR) des Schadensberichts (RAP_END);
∘ geeignete Speichermedien (MDS) zur Speicherung dieses Schadensberichts (RAP_END),
**dadurch gekennzeichnet, dass** bei einem beweglichen Luftfahrzeug (AERO) die Mittel zur Regelung (MDAS) die Ausrichtung des Sensors (CAP) je nach Position und Flugbahn des Luftfahrzeugs (AERO) steuern.

2. Vorrichtung (DISP) nach einem der vorstehenden Ansprüche, **dadurch gekennzeichnet, dass** die Mittel zur Erfassung (MDAC) einen direktionalen Sensor (CAP), z. B. ein Mikrofon, und einen parabolischen Verstärker (AMP) umfassen.

3. Vorrichtung (DISP) nach dem vorstehenden Anspruch, **dadurch gekennzeichnet, dass** die Mittel zur Erfassung (MDAC) geeignete Mittel zur Regelung (MDAS) umfassen, mit denen die Ausrichtung des direktionalen Sensors (CAP) gesteuert werden kann.

4. Vorrichtung (DISP) nach einem der vorstehenden Ansprüche, **dadurch gekennzeichnet, dass** die Mittel zur Erfassung (MDAC) Mittel zur Identifizierung (MDI) des Luftfahrzeugs (AERO) umfassen.

5. Vorrichtung (DISP) nach einem der vorstehenden Ansprüche, **dadurch gekennzeichnet, dass** das mindestens ein Modul (MOD) Mittel zur Aufzeichnung (MDE) der durch die Mittel zur Erfassung (MDAC) gewonnenen akustischen Signale umfasst.

6. Vorrichtung (DISP) nach einem der vorstehenden Ansprüche, **dadurch gekennzeichnet, dass** der Server (SERV) über eine Benutzeroberfläche (INT) verfügt, über die sich ein Benutzer einen Schadensbericht (RAP_END) anzeigen lassen kann.

7. Vorrichtung (DISP) nach einem der vorstehenden Ansprüche, **dadurch gekennzeichnet, dass** über die Mittel zum Empfang (MDR) des Servers (SERV) Daten aus dem Luftfahrzeug (AERO) empfangen werden können.

8. Vorrichtung (DISP) nach dem vorstehenden Anspruch, **dadurch gekennzeichnet, dass** der Server (SERV) Mittel zur Analyse (MDAN) umfasst, mit denen die Daten aus dem Luftfahrzeug (AERO) ausgewertet werden können.

9. Verfahren (PROC) zur Erkennung von Anomalien durch akustische Analyse einer Turbomaschine (TURBO) eines Luftfahrzeugs (AERO), wobei dieses Verfahren durch eine Vorrichtung (DISP) nach einem der vorstehenden Ansprüche durchgeführt wird und das Verfahren (PROC) die nachstehenden aufeinanderfolgende Schritte umfasst:
- Erfassung akustischer Signale aus der Turbomaschine (TURBO);
- Verarbeitung dieser Signale, um daraus einen Schadensbericht (RAP_END) zu erstellen;
- Übertragung dieses Schadensberichts (RAP_END) an den Server (SERV);
- Speicherung dieses Schadensberichts (RAP_END).

## Claims

1. Device (DISP) for detecting anomalies by acoustic analysis of an aircraft (AERO) turbine engine (TURBO), the device (DISP) is not on board and the device (DISP)comprising:
- at least one mobile module (MOD) comprising:
∘ directional acquisition means (MDAC) to acquire acoustic signals from the turbine engine (TURBO);
∘ means (MDTT) of processing said signals, adapted to generate a damage report (RAP_END);
∘ means (MDTM) of transmitting said damage report (RAP_END);
- a server (SERV) capable of exchanging data with the at least one module (MOD), said server (SERV) comprising:
∘ means of reception (MDR) of the damage report (RAP_END);
∘ storage means (MDS) adapted to store said damage report (RAP_END),
**characterised in that**, when the aircraft (AERO) is moving, a slaving means (MDAS) adjust the orientation of a sensor (CAP) depending on the position and trajectory of the aircraft (AERO).

2. Device (DISP) according to claim 1, **characterised in that** the acquisition means (MDAC) comprise a directional sensor (CAP) such as a microphone, and a parabolic amplifier (AMP).

3. Device (DISP) according to the previous claim, **characterised in that** the acquisition means (MDAC) comprise slaving means (MDAS) adapted to control the orientation of the directional sensor (CAP).

4. Device (DISP) according to any one of the previous claims, **characterised in that** the acquisition means (MDAC) comprise aircraft (AERO) identification means (MDI).

5. Device (DISP) according to any one of the previous claims, **characterised in that** at least one module (MOD) comprises means (MDE) of recording acoustic signals acquired using the acquisition means (MDAC).

6. Device (DISP) according to any one of the previous claims, **characterised in that** the server (SERV) comprises a user interface (INT) adapted to enable a user to display a damage report (RAP_END).

7. Device (DISP) according to any one of the previous claims, **characterised in that** the reception means (MDR) of the server (SERV) are adapted to receive data from the aircraft (AERO).

8. Device (DISP) according to the previous claim, **characterised in that** the server (SERV) comprises analysis means (MDAN) capable of using data from the aircraft (AERO).

9. Method (PROC) of detecting anomalies by acoustic analysis of an aircraft (AERO) turbine engine (TURBO), said method being implemented by a device (DISP) according to any one of the previous claims, said method (PROC) comprising successive steps for:
- acquisition of acoustic signals from the turbine engine (TURBO);
- processing of said signals so as to generate a damage report (RAP_END);
- transmission of said damage report (RAP_END) to the server (SERV);
- storage of said damage report (RAP_END).
